# EUROPEAN PATENT APPLICATION

(11) **EP 3 165 902 A1**
(43) Date of publication of application: **10.05.2017**
(21) Application number: 15193573.1
(22) Date of filing: 09.11.2015
(51) Int. Cl.: G01N 21/51, G01N 21/53

(54) **A METHOD AND A SENSOR FOR MEASURING SUSPENDED SOLIDS IN A LIQUID**

(71) Applicant: ABB Schweiz AG, 5400 Baden (CH)
(72) Inventor: FELLOW, Darren, Whitechurch, RG 28 7 HB (GB); REGA, Carlos, Worcester, WR5 2PJ (GB)
(74) Representative: Marks, Frank

(57) **Abstract**

The invention is about a method for measuring suspended solids (2) content in a liquid sample (3) by measuring turbidity and using a pre-calibrated relation between turbidity and suspended solids content to determine suspended solids content from turbidity measurement, whereby a measurement of angular distribution of light scattered from the liquid sample (3) is used as a means to track changes in the nature of the suspended solids in the liquid sample and as a means to control quality of the suspended solids measurement. The invention further describes a sensor (1) for measuring suspended solids (2) in a liquid sample (3), said sensor (1) comprising a housing (4a,4b, 4c, 4d) having a sample interface area at one end thereof for interfacing the liquid (3) to be measured, a light source (8) mounted to said housing (4a,4b, 4c, 4d) in such a manner as to transmit a beam of light (11) into the liquid sample (3), a first detector (12) mounted to said housing (4a,4b, 4c, 4d) and arranged to measure light scattered off particles (2) suspended in said liquid sample (3) at a first angle (α) and thereby providing a measurement of turbidity of said sample (3), and the sensor (1) further comprises a second detector (18) mounted to said housing (4a,4b, 4c, 4d) and arranged to measure light scattered off particles (2) suspended in said liquid sample (3) at a second angle (β), different from the first angle (α), and a measurement unit (15) using the measurement of light scattered at the second angle (β) to control quality of the measurement of suspended particles (2) in the liquid sample (3).

## Description

The present invention is about a method for measuring suspended solids content in a liquid sample by measuring turbidity and using a pre-calibrated relation between turbidity and suspended solids content to determine suspended solids content from turbidity measurement.

The present invention is further about a sensor for measuring suspended solids in a liquid sample, said sensor comprising a housing having a sample interface area at one end thereof for interfacing the liquid to be measured, a light source mounted to said housing in such a manner as to transmit a beam of light into the liquid sample, and a first detector mounted to said housing and arranged to measure light scattered off particles suspended in said liquid sample at a first angle and thereby providing a measurement of turbidity of said sample.

For a given water sample, there is a roughly linear relation between the turbidity of the sample and the suspended solids content. This relation is used to measure the suspended solids content of water using turbidity as a surrogate.

US 7 392 813 describes a turbidity sensor that determines the concentration of suspended solids for application in a dish-washing machine, applying the principle of optical transmission measurement to determine turbidity. Transmission measurement is limited by the exponential decay of transmitted irradiance in relation to the optical path length. This limits the maximum optical path length at which the transmitted optical power of a given light source is still sufficient to be detected by the receiver. Sensors based on transmission measurement thus are subject to limitations of performance in relation to the diameter of the sample conduit.

A viable alternative is to measure turbidity using the known Nephelometer arrangement which measures light scattered off suspended particles at 90° with respect to a source beam. The light source typically operates in the near infrared wavelength region in order to reduce the effects that the presence of color in the sample may have on the measurement.

US 2015/0116709 A1 describes a turbidity sensor that combines the Nephelometer approach with the transmission approach, in attempt to compensate the drawbacks of the transmission approach by combining with the Nephelometer method. However this does not really remedy the drawbacks of the transmission type measurement, particularly for applications in the water and waste water industry.

In the water industry, there is a particular interest in using light scattering for measuring suspended solids content in water, because the standard laboratory method is complex and time consuming, whereas a measurement of turbidity by light scattering can be performed effectively in real time. In general there is a linear/linear or log/log dependency on the turbidity of the sample and the suspended solids content, but the slope of the relation is dependent on the nature of the solids in suspension. The lack of a single conversion factor from turbidity to suspended solids means that in situation where the sample under analysis changes over time, for instance, in a raw water intake from a river, the suspended solids content inferred from a turbidity measurement can have a significant error. In other words, the relation between the turbidity and the suspended solids content of sample depends on the nature of the suspended solids and the medium. If the solids suspended in a medium change, for instance their particle size distribution changes, or the composition of the solids changes, such that the refractive index of the particles changes, the relation used to convert turbidity to suspended solids also changes.

So it is the objective of the present invention to provide an improved optical suspended solids measurement method. It is a further objective of the present invention to provide an optical suspended solids measurement sensor, which is configured to determine by itself when the sample has changed, and hence the calibration of turbidity to suspended solids needs to be redone.

The objective according to the method is achieved by a method according to claim 1.

The objective according to the sensor is achieved by a sensor with the features according to claim 7.

The method according to the invention uses a measurement of angular distribution of light scattered from the liquid sample as a means to track changes in the nature of the suspended solids in the liquid sample and as a means to control quality of the suspended solids measurement.

In a preferable embodiment, the measurement of angular distribution of light scattered from the liquid sample is used to flag a need for re-calibration of the relation between turbidity and suspended solids content.

In a preferable embodiment, the measurement of angular distribution of light scattered from the liquid sample is used to select a more appropriate calibration of the relation between turbidity and suspended solids content based on historical data.

In a preferable embodiment, the ratio of the intensity of light scattered at two different angles is measured and this measured ratio is used to track the angular distribution of scattered light and so to indicate when the calibration used to calculate suspended solids from turbidity needs to be changed.

In a preferable embodiment, changes in the nature of the suspended solids comprise changes in composition and/or changes in particle size distribution.

In a preferable embodiment, the method according to the invention uses an expert system to build a mapping between the value of the signal ratio and a set of suspended solids calibrations, and to automatically use the calibration values most adequate to the sample currently being measured.

The sensor according to the invention further comprises a second detector mounted to the sensor housing and is arranged to measure light scattered off particles suspended in said liquid sample at a second angle, different from the first angle, and a measurement unit using the measurement of light scattered at the second angle to control quality of the measurement of suspended particles in the liquid sample.

In an advantageous embodiment the sensor further comprises a suspended solids measuring unit arranged to use a pre-calibrated relation between turbidity and suspended solids content to provide a measurement of suspended solids in said sample, and a diagnostic unit arranged to measure the value of the signal ratio of the light scattered at the two different angles, thereby tracking changes in the nature of the solids suspended in the sample and using that value of the signal ratio to validate the pre-calibrated relation between turbidity and suspended solids content.

Measuring the ratio of the light scattered at two different angles according to the invention allows to track the angular distribution of scattered light, and indicate when the calibration used to calculate suspended solids from turbidity needs to be changed. The reason is that the angular distribution of light scattered by particles suspended in water is determined by the composition of the particles and their particle size distribution. Changes in either the composition or the particle size distribution of the particles will lead to changes in the angular distribution of the light scattered by the particles.

The invention enables to build an instrument that measures the angular distribution of the light scattered by a sample for the purpose of determining when the nature of the sample changes. By nature of the sample is meant either composition and/or particle size distribution.

The advantage of the invention is that it provides an optical suspended solids sensor that can determine whether the relation between turbidity and suspended solids has changed. So the user has the advantage that he is provided with an indication of the change in the nature of the sample so that the suspended solids calibration needs to be checked.

In an advantageous embodiment, the first angle is 90°, and the second angle is an obtuse angle.

In a further advantageous embodiment, the second angle is in the order of magnitude between 100° and 170°, preferably between 120° and 150°.

In an advantageous embodiment, the light source is an IR light source.

In an advantageous embodiment, the nature of solids comprises composition and/or particle size distribution.

In an advantageous embodiment, the diagnostic unit is arranged to flag the need for re-calibration of the relation between turbidity and suspended solids.

In an advantageous embodiment, the diagnostic unit is arranged to adapt the calibration relation in response to the value of the signal ratio of the light scattered at the two different angles.

In an advantageous embodiment, the diagnostic unit is arranged to comprise a set of characteristic relations between the value of the signal ratio and the calibration-relation between turbidity and suspended solids content and to automatically select the calibration relation most adequate to the measured signal ratio of the light scattered at the two different angles of the liquid sample.

The invention and further advantages of the method and the sensor according to the invention will now be described in more detail with reference to the figure.
- Fig. 1: shows in an exemplary way a schematic setup of a sensor according to a first embodiment of the invention,
- Fig. 2: shows in an exemplary way a schematic setup of a sensor according to a second embodiment of the invention,
- Fig. 3: shows in an exemplary way a schematic setup of a sensor according to a third embodiment of the invention.

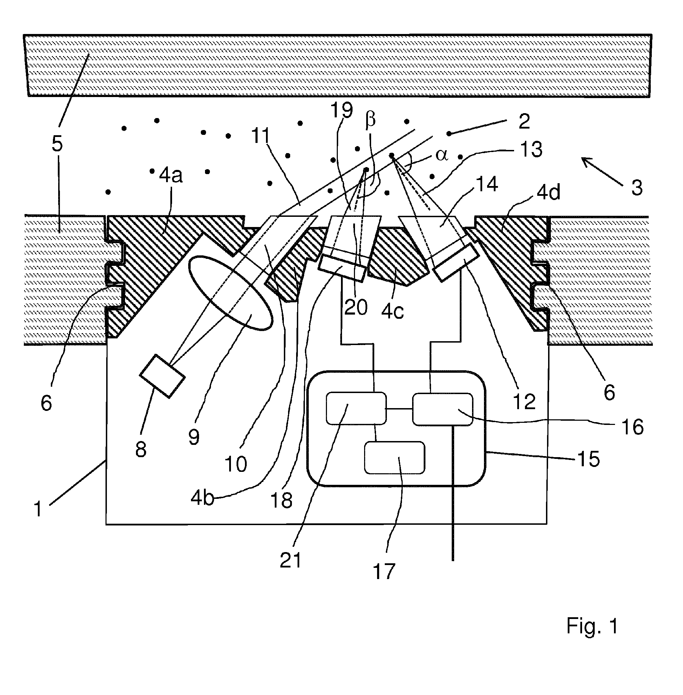

Figure 1 shows in a schematic cross-sectional view a sensor 1 for measuring suspended solids 2 in a liquid 3. The sensor 1 has a housing 4, represented schematically in the figure by the hatched sections 4a, 4b, 4c, 4d. In the example of the figure, the sensor 1 is inserted in the wall 5 of a fluid containing reservoir, for example a flow tube or a tank or the like. By example only, the way of insertion in the wall is schematically illustrated by means of a threaded side wall section 6 of the housing, in engagement with a corresponding thread in an opening in the wall 5. The outer surface 7 of the sensor 1, which is more or less flush with the inner surface of the wall 5 when the sensor 1 is mounted, forms a sample interface area, which is interfacing the liquid to be measured , meaning it is in contact with the liquid in the fluid containing reservoir. This can be for example the intake or the efflux water of a waste water treatment plant, or the process efflux from a food plant, or the like.

A light source 8 is mounted within the housing. This is here for example only an LED light source emitting in the near infrared wavelength region. A lens 9 collimates the output from the LED light source 8 to illuminate the liquid sample 3 through a first optical window 10. A beam of light 11 is transmitted into the liquid sample 3 through the optical window 10.

A first detector 12 is mounted in the housing and arranged to measure light scattered off particles 2 suspended in said liquid sample 3 at a first angle α of 90° and thereby providing a measurement of turbidity of said sample 3 following the nephelometric approach. The first scattered light beam 13 enters the sensor housing through a second optical window 14.

The signal from the 90 degree detector 12 is used to measure turbidity according to the ISO27027 standard. For this purpose the sensor 1 comprises a measurement unit 15. A sub-unit within the measurement unit 15 is formed to function as a suspended solids measuring unit 16. This sub-unit is arranged to use a pre-calibrated relation between turbidity and suspended solids content to provide a measurement of suspended solids in said sample, using the turbidity measurement data provided from the first detector, the 90° detector. The suspended solids measuring unit 16 is connected through a signal line with the first detector 12. The pre-calibrated relation can be stored in the form of a table or an algorithm or a set of characteristic curves, stored in a memory 17 which is part of the measuring unit 15 or the suspended solids measuring unit 16.

Particles suspended in a fluid scatter light in all directions. The intensity of the scattered light exhibits varies with the angle measured with respect to the incident light. The angular dependency of the scattered light is determined by the relative size of the scatterers with respect to the wavelength of the light. The intensity of the scattered light is determined by the ratio of the refractive index of the particle to the refractive index of the suspending medium.

The sensor 1 sensor further comprises a second detector 18 mounted in the housing and arranged to measure light scattered off particles 2 suspended in the liquid sample 3 at a second angle β, which is different from the first angle, and which in the example here is about 135°, could however also be more or less, but it should not be 90°. The second detector 18 is positioned between the light source 8 and the first detector, the 90° detector. The second scattered light beam 19 enters the sensor housing through a third optical window 20.

The measurement unit 15 comprises a diagnostic unit 21, connected signal wise to the second detector 18 and the suspended solids measuring unit 16, and arranged to measure the value of the signal ratio of the light scattered at the two different angles α, β, thereby tracking changes in the nature of the solids 2 suspended in the sample 3 and using that value of the signal ratio to validate the pre-calibrated relation between turbidity and suspended solids content.

The functioning principle of the sensor 1 is as follows. It measures the angular distribution of the scattered light as a means to track changes in the nature of the solids suspended in the water sample under test, and uses that information to either flag the need for re-calibration of the relation between turbidity and suspended solids, or to select a more appropriate calibration based on historical data.

The functioning principle is a two angle measurement. As an implementation of this principle it measures the ratio of the intensity of light scattered at the two different angles, 90° and 135°. For a given type of scattering solid 2, that ratio should remain constant regardless of concentration, and only change when the nature of the sample changes.

The relative signals of the two detectors are not normalized, both changes in particle size distribution and particle refractive index will produce a change in the ratio of the signals from both detectors 12, 18.

In another embodiment, not shown in the figure, the measuring unit 15 can comprise or use an expert system to build a mapping between the value of the signal ratio and a set of suspended solids calibrations, so that it can automatically use the calibration values most adequate to the sample currently being measured.

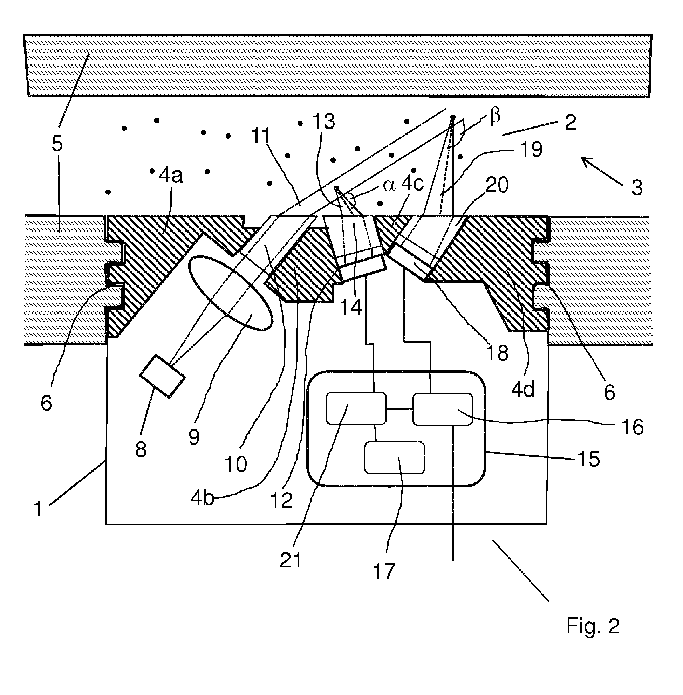

Figure 2 shows a second embodiment of the invention. The difference to the example as shown in figure 1 is, that the arrangements of second detector 18 and third optical window 20 on the one hand and second optical window 14 and first detector 12 have changed their position relative to the first optical window 10 and the light source 8. So the first detector 12 with second optical window 14, measuring the light scattered off particles suspended in the liquid sample 3 at a first angle α of 90° and thereby providing a measurement of turbidity of said sample 3 following the nephelometric approach, now is nearer to the first optical window 10 and the light source 8 than the second detector 18 and third optical window 20, which measures light scattered off particles suspended in the liquid sample 3 at a second angle β, which is different from the first angle, and which in the example here is about 135°, and which is used to control quality of the measurement of suspended particles in the liquid sample.

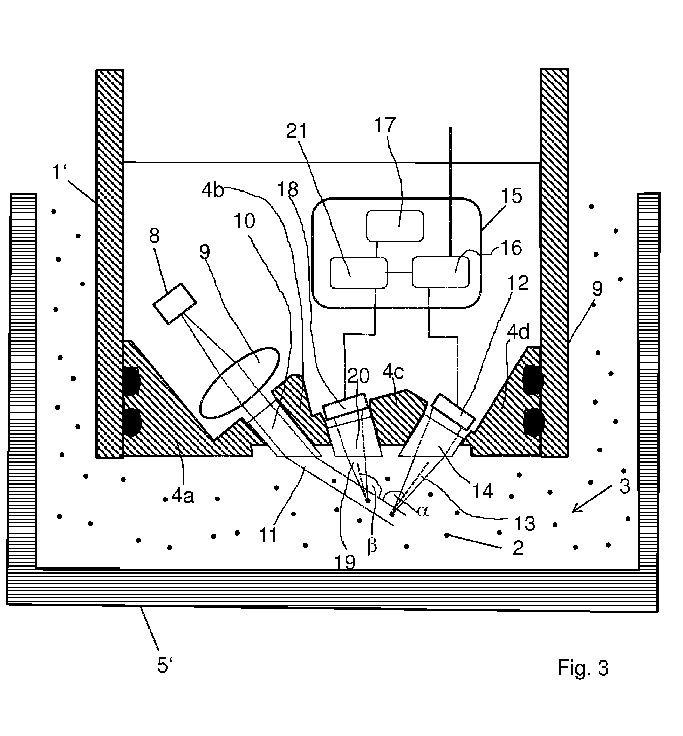

Figure 3 shows a third embodiment of the invention. In this embodiment, the sensor 1' is designed as an immersible sensor probe which can be immersed in the fluid, for instance in a channel or in an open tank 5'. Both ways of arranging the first and second detectors 12, 18 relative to each other and to the light source 8 can be realized in the immersible probe arrangement, as an example only, figure 3 shoes schematically the immersible probe arrangement with the sensor configuration as described in figure 1.

### Reference numerals

- 1: sensor
- 1': sensor
- 2: suspended solids
- 3: liquid sample
- 4a: housing section
- 4b: housing section
- 4c: housing section
- 4d: housing section
- 5: wall
- 5': tank
- 6: threaded side wall section
- 7: outer surface
- 8: light source
- 9: lens
- 10: first optical window
- 11: beam of light
- 12: first detector
- 13: first scattered light beam
- 14: second optical window
- 15: measuring unit
- 16: suspended solids measuring unit
- 17: memory
- 18: second detector
- 19: second scattered light beam
- 20: third optical window
- 21: diagnostic unit

## Claims

1. A method for measuring suspended solids (2) content in a liquid sample (3) by measuring turbidity and using a pre-calibrated relation between turbidity and suspended solids content to determine suspended solids content from turbidity measurement, whereby a measurement of angular distribution of light scattered from the liquid sample (3) is used as a means to track changes in the nature of the suspended solids in the liquid sample and as a means to control quality of the suspended solids measurement.

2. A method according to claim 1, whereby measurement of angular distribution of light scattered from the liquid sample is used to flag a need for re-calibration of the relation between turbidity and suspended solids content.

3. A method according to claim 1, whereby measurement of angular distribution of light scattered from the liquid sample is used to select a more appropriate calibration of the relation between turbidity and suspended solids content based on historical data.

4. A method according to claim 1, whereby the ratio of the intensity of light scattered at two different angles (α, β) is measured and this measured ratio is used to track the angular distribution of scattered light and so to indicate when the calibration used to calculate suspended solids from turbidity needs to be changed.

5. A method according to claim 1, whereby changes in the nature of the suspended solids comprise changes in composition and/or changes in particle size distribution.

6. A method according to claim 3, further comprising to use an expert system to build a mapping between the value of the signal ratio and a set of suspended solids calibrations, and to automatically use the calibration values most adequate to the sample currently being measured.

7. A sensor (1) for measuring suspended solids (2) in a liquid sample (3), said sensor (1) comprising
- a housing (4a,4b, 4c, 4d) having a sample interface area at one end thereof for interfacing the liquid (3) to be measured,
- a light source (8) mounted to said housing (4a,4b, 4c, 4d) in such a manner as to transmit a beam of light (11) into the liquid sample (3),
- a first detector (12) mounted to said housing (4a,4b, 4c, 4d) and arranged to measure light scattered off particles (2) suspended in said liquid sample (3) at a first angle (α)and thereby providing a measurement of turbidity of said sample (3), **characterized in that** the sensor (1) further comprises
- a second detector(18) mounted to said housing (4a,4b, 4c, 4d) and arranged to measure light scattered off particles (2) suspended in said liquid sample (3) at a second angle (β), different from the first angle (α),
- a measurement unit (15) using the measurement of light scattered at the second angle (β) to control quality of the measurement of suspended particles (2) in the liquid sample (3).

8. A sensor (1) according to claim 7, whereby the sensor further comprises a suspended solids measuring unit (16) arranged to use a pre-calibrated relation between turbidity and suspended solids content to provide a measurement of suspended solids in said sample (3), and
- a diagnostic unit (21) arranged to measure the value of the signal ratio of the light scattered at the two different angles (α, β), thereby tracking changes in the nature of the solids (2) suspended in the sample (3) and using that value of the signal ratio to validate the pre-calibrated relation between turbidity and suspended solids (2) content.

9. A sensor (1) according to claim 7, whereby the first angle (α) is 90°, and the second angle (β) is an obtuse angle.

10. A sensor (1) according to claim 9, whereby the second angle (β) is in the order of magnitude between 100° and 170°, preferably between 120° and 150°

11. A sensor (1) according to claim 7, whereby the light source (8) is a near infrared light source.

12. A sensor (1) according to claim 8, whereby the nature of solids comprises composition and/or particle size distribution.

13. A sensor (1) according to claim 8, whereby the diagnostic unit (21) is arranged to flag the need for re-calibration of the relation between turbidity and suspended solids.

14. A sensor (1) according to claim 8, whereby the diagnostic unit (21) is arranged to adapt the calibration relation in response to the value of the signal ratio of the light scattered at the two different angles (α, β).

15. A sensor (1) according to claim 14, whereby the diagnostic unit (21) is arranged to comprise a set of characteristic relations between the value of the signal ratio and the calibration-relation between turbidity and suspended solids content and to automatically select the calibration relation most adequate to the measured signal ratio of the light scattered at the two different angles of the liquid sample.
